# EUROPEAN PATENT APPLICATION

(11) **EP 4 755 790 A1**
(43) Date of publication of application: **10.06.2026**
(21) Application number: 25215279.8
(22) Date of filing: 12.11.2025
(51) Int. Cl.: B64B 1/06, B64B 1/08, B64F 5/60

(54) **SYSTEMS AND METHODS FOR INSPECTING AIRSHIP STRUCTURES**

(30) Priority: 09.12.2024 US 202418974299
(71) Applicant: LTA Research And Exploration, LLC, Sunnyvale, CA 94085 (US)
(72) Inventor: LaQua, Brian E., Oakland (US); Gutwein, Daniel Jacob, Seville (US); Nguyen, Minh N., Sunnyvale (US)
(74) Representative: Meissner Bolte Nürnberg

(57) **Abstract**

Systems and methods disclosed herein enable inspections for damage in airship structures based on pressurization tests applied to segmented volumes in the airship structures. An airship structure may include one or more first joints having a plurality of first slots having an open internal interface therebetween such that the plurality of first slots are volumetrically connected internally. The airship structure may include a plurality of second joints having a plurality of second slots having a closed internal interface therebetween such that the plurality of second slots are volumetrically isolated internally. The airship structure may include a plurality of tubes wherein each end of the tubes is inserted into either (a) one of the plurality of first slots of one of the one or more first joints or (b) one of the plurality of second slots of one of the plurality of second joints, wherein at least one slot selected from the first slots or the second slots has a hole.

## Description

This disclosure generally relates to airship structures and techniques for inspecting airship structures.

Airships are lighter-than-air aircraft that obtain the necessary lift for flight based on buoyancy generated by gas that is less dense than the surrounding air. Typically, an airship can comprise a structural frame attached to one or more envelopes or cells that hold lifting gas, such as helium or hydrogen. The structural frame may be built using composite materials to provide structural integrity to the envelope and other components attached to the airship.

Like any aircraft, an airship's structural integrity must be routinely checked to ensure safety. Conventional inspection techniques require line-of-sight and/or direct contact with the structural parts (e.g., visual, thermography, ultrasonic, MAUS resonance, MADS PE, etc.). However, such conventional techniques are not suitable for inspecting an airship's frame. Composite parts of the airship can be sensitive to damage and difficult to visually detect. In addition, due to the airship's envelope, the frame of the airship is not directly visible or accessible for inspection. Even if a technician could walk into the envelope to inspect the frame, the scope and extension of the inspection are restricted by the limited internal access and the presence of gas cells. In addition, the large size of the airship and its structural elements equate to a large inspection area. Thus, structural inspection for airships via conventional or established techniques is challenging and time-consuming.

Accordingly, there is a need for an improved technique for inspecting airship structures that overcomes the drawbacks and limitations of conventional techniques.

Embodiments according to the invention are disclosed in particular in the appended claims.

Airships have historically been classified as rigid, non-rigid, and semi-rigid. In non-rigid airships, the hull is a pressure vessel whose hull structural stiffness is attained by internal pressure without the aid of hard structure, although the fins of non-rigid airships typically use hard structure. In rigid airships, structural stiffness is attained using metal or composite members, typically a combination of rings, longerons, and shear members. Semi-rigid airships typically combine these two methods. The embodiments described herein preferably pertain to tubular hard structures used in at least these three configurations for airships.

Components of an airship can contain defects from manufacturing or repair, as well as damages caused during operation, shipping, and/or manufacturing. Embodiments disclosed herein pertain to airship designs and inspection systems that allow the structural integrity of an airship to be efficiently examined. In particular, a pressurized structure inspection (PSI) system is disclosed to detect structural damages by measuring the decay or pressure drop of air pressure injected within sections of the airship's frame. Such sections are constructed using joints and tubes with internal structures that, when assembled, form air-tight volumes. During an inspection, a technician would inject pressurized air into a select volume and monitor the pressure within it. By comparing the pressure decay profile against an expected profile or detecting significant pressure drop over a short duration, the technician would be able to determine whether the welded joints, adhesive bonds, and tubes that form the volume have any leakage, which is a likely indication of the presence of structural defects or damage.

The PSI system provides an efficient and quantifiable measure for structural damage or defects. The PSI system makes validation of structural integrity possible, even without requiring the removal of the airship's envelope or direct contact with the airship's frame. Compared to conventional inspection techniques that could take hundreds of hours of human labor, the PSI system could reduce inspection time significantly (e.g., for a given structure that may take hundreds of hours to inspect or validate, the PSI system could perform the same in less than 2 hours). This drastic reduction in inspection time makes pre-flight inspections of massive composite aerospace structures practical. Moreover, because the system provides a quantitative measure for indications of damage or defects, inspections would no longer rely solely on the experience and training of the technicians performing the inspections and could, therefore, be more reliable and more easily scaled.

The terms used in this specification generally have their ordinary meanings in the art, within the context of this disclosure, and in the specific context where each term is used. Certain terms are discussed below, or elsewhere in the specification, to provide additional guidance to the practitioner in describing the compositions and methods of the disclosed subject matter and how to make and use them.

As used herein, "airship" refers to a type of aircraft that achieves lift and buoyancy through the use of gas-filled envelopes or balloons, typically including structures of the physical framework, components, and materials that constitute the construction of an airship. Commonly, airships are lighter-than-air vehicles that rely on their buoyant gas-filled envelopes to achieve lift. Components of an airship typically include a frame, an envelope surrounding the frame, and gas cells. The frame may be constructed using a variety of techniques, including interconnected tubes and joints, to support gas cells within the envelope. Gas cells are compartments filled with lifting gas (such as helium) that contribute to the airship's buoyancy. Tubes help create the structure that defines the shape of these gas cells. Commonly, carbon fiber reinforced polymer tubes (CFRP tubes) have been used in the construction and operation of airships. These lightweight and strong tubes can contribute to improving the overall performance, durability, and efficiency of airships.

As used herein, a "slot" refers to a receptacle or socket in a joint designed to receive a tube. To connect a first joint to a second joint, one inserts one end of a tube into the slot of the first joint and the other end into the slot of the second joint. By repeating this process, a network of interconnected joints is created, forming the frame of an airship.

As used herein, "volume" refers to a defined space within interconnected tubes and joints used for constructing the frame of an airship. A "selected volume" refers to a specific testing portion during an inspection. As will be described in further detail, volumes defined by the internal structures of particular joints and tubes/connectors are designed to maintain pressure injected into the volume absent leaks and damages. As such, when leaks and damages exist, pressure injected into the volume would decay faster than an expected profile. Thus, by measuring the pressure drop over time and determining a pressure decay profile/rate, the pressure inspection system could determine whether the section of the airship being inspected has any structural defect or damage. The volume within a section of the airship may be formed by the internal structures of joints and tubes. For example, a joint can be a central-hollow hub connecting different structural tubes of airships, serving as one of many internal joints in a series of components, to form an isolated volume. The endpoints of the isolated volume may be formed by joints with one or more dividers (e.g., wall or membrane sealed within the joint). Together, the joints and tubes form one or more volumes within the airship's frame to facilitate pressure inspection.

As used herein, the term "manifold assembly" refers to a system used to control and monitor the flow of compressed gas/air into a volume under inspection. In the disclosure, the manifold assembly is also known as GSE (Ground Support Equipment) manifold assembly, used during inspection. Multiple GSE manifolds can be employed to concurrently inspect multiple volumes, thereby reducing inspection time. A manifold assembly can include:
a. On/Off Valve
b. Digital Pressure Gauge
c. Pressure Sensor
d. ¼ NPT Male Plugs
e. PTFE Tape

As used here, "Data Acquisition System," also short for DAQ, refers to a system of collecting, recording, and analyzing data related to the pressure changes occurring within the system being tested in a pressure decay inspection. A DAQ system typically comprises hardware and software components designed to measure and monitor various parameters, including pressure, temperature, time, and more. The functions of a DAQ system in pressure decay inspection can include, but are not limited to, sensor integration, data sampling, data logging, data analysis, and data storage. In certain embodiments, the DAQ system is designed to perform pressure decay inspections on airship structural elements and is engineered to ensure reliable data acquisition, allowing for the assessment and estimation of the airship's airtightness and structural integrity.

In particular embodiments, DAQ can include one or more of the following components:
1) Pressure Sensors. High-precision pressure sensors are strategically placed at critical points within the airship structure. These sensors are responsible for measuring air pressure changes over time.
2) Analog-to-Digital Converters (ADCs). The DAQ system incorporates ADCs with a high sampling rate to ensure precise conversion of analog pressure signals into digital data. These ADCs maintain data integrity during acquisition.
3) Signal Conditioning Modules. The Signal conditioning modules are employed to accurately amplify, filter, and condition pressure signals from the sensors. These modules enhance the quality of acquired data.
4) Microcontroller. The microcontroller orchestrates the entire data acquisition process. It interfaces with sensors, ADCs, and signal conditioning modules, ensuring synchronized data collection.
5) Data Logger. The DAQ system is equipped with a data logger with substantial memory capacity. This logger timestamps and stores acquired data securely, facilitating post-inspection analysis.
6) Communication Interface. To transfer data for analysis and reporting, the DAQ provides various communication interfaces, including USB and Ethernet connections, allowing seamless integration with external systems or computers.
7) User Interface. The DAQ system boasts an intuitive graphical user interface (GUI) that enables users to configure inspection parameters, monitor real-time pressure changes, and visualize inspection results.

A particular embodiment of a DAQ assembly system can be configured as follows. The pressure sensors of the manifold assembly are connected to the DAQ system through analog input channels. Each sensor is calibrated and precisely connected to ensure accurate measurements. Single conditioning modules are connected between the sensors and ADCs to condition and amplify sensor signals before digitization. Analog-to-digital converters are connected to the microcontroller, allowing for the digitization of conditioned pressure signals. The data logger is connected to the microcontroller and stores timestamped data in its memory. Also, the DAQ system connects to external devices or computers through USB and Ethernet ports for data transfer and remote monitoring, wherein the external devices or computers can perform a series of commands to execute necessary instructions for processing the pressure decay inspection.

The following numbered examples are embodiments of the present disclosure. Any of these embodiments can be claimed in a separate claim, e.g. by substituting the word "Example" by "Claim", in particular in the order as mentioned below and/or in any combination with any embodiment described above or with any of the features of the attached claims.

Example 1: an airship structure includes (or: comprises) one or more first joints, wherein each of the first joints includes (or: comprises) a plurality of first slots having an open internal interface therebetween such that the plurality of first slots are volumetrically connected internally; a plurality of second joints, wherein each of the second joints includes (or: comprises) a plurality of second slots having a closed internal interface therebetween such that the plurality of second slots are volumetrically isolated internally; and a plurality of tubes with hollow centers connecting the one or more first joints and the plurality of second joints to form a continuous internal volume within the airship structure, wherein each end of the tubes is inserted into either (a) one of the plurality of first slots of one of the one or more first joints or (b) one of the plurality of second slots of one of the plurality of second joints; wherein at least one slot selected from the first slots or the second slots has a hole configured to receive air injected into the continuous internal volume to inspect the airship structure.

Example 2: the airship structure of Example 1, wherein the hole or another hole in at least one slot selected from the first slots or the second slots is configured to receive a pressure monitor that monitors air pressure within the continuous internal volume during an inspection of the airship structure.

Example 3: the airship structure of Example 1 or 2, wherein the pressure monitor is configured to monitor the air pressure within the continuous internal volume to detect defects or damage in the one or more first joints, the plurality of second joints, and the plurality of tubes.

Example 4: the airship structure of any one of Examples 1 to 3, wherein the open internal interface of each of the one or more first joints includes (or: comprises) a passageway that allows air to pass between the plurality of first slots of that first joint.

Example 5: the airship structure of any one of Examples 1 to 4, wherein the closed internal interface of each of the plurality of second joints includes (or: comprises) an internal segmentation member that prevents air from passing between the plurality of second slots of that second joint.

Example 6: the airship structure of any one of Examples 1 to 5, wherein the continuous internal volume is a single airtight volume when all holes in the plurality of first slots of the one or more first joints and the plurality of second slots of the plurality of second joints are sealed to prevent air from escaping through the holes.

Example 7: the airship structure of any one of Examples 1 to 6, wherein a bonding material fills an annular void between each end of the plurality of tubes and one of the first slots or the second slots into which that end of the tube is inserted.

Example 8: the airship structure of any one of Examples 1 to 7, further including (or: comprising): a second continuous internal volume formed by a second plurality of tubes and a second plurality of joints; and a bridge connection assembly having an air bridge tube, wherein a first end of the air bridge tube is coupled to the continuous internal volume via a first hole, and a second end of the air bridge tube is coupled to the second continuous internal volume via a second hole.

Example 9: the airship structure of Example 8, wherein the bridge connection assembly includes (or: comprises) a valve disposed along the air bridge tube, wherein the valve is configured to selectively connect and disconnect the continuous internal volume and the second continuous internal volume.

Example 10: the airship structure of any one of Examples 1 to 9, wherein the one or more first joints, the plurality of second joints, and the plurality of tubes form at least a section of a longeron of the airship structure.

Example 11: the airship structure of any one of Examples 1 to 10, wherein the one or more first joints, the plurality of second joints, and the plurality of tubes form at least a section of a mainframe of the airship structure.

Example 12: the airship structure of any one of Examples 1 to 11, wherein: at least one of the one or more first joints has at least one additional slot different from the plurality of first slots of that first joint; or at least one of the plurality of second joints has at least one additional slot different from the plurality of second slots of that second joint.

Example 13: the airship structure of any one of Examples 1 to 12, wherein: at least one of the one or more first joints is different from other ones of the one or more first joints; or at least one of the plurality of second joints is different from other ones of the plurality of second joints.

Example 14: an airship structure includes (or: comprises) a plurality of joints including a first joint and a second joint, wherein each of the plurality of joints includes (or: comprises) a plurality of slots having a closed internal interface therebetween such that the plurality of slots are volumetrically isolated internally; and a tube with a hollow center connecting the first joint and the second joint to form a continuous internal volume within the airship structure, wherein one end of the tube is inserted into one of the plurality of slots of the first joint, and another end of the tube is inserted into one of the plurality of slots of the second joint; wherein at least one slot connected to the tube has a hole configured to receive air injected into the continuous internal volume to inspect the airship structure.

Example 15: the airship structure of Example 14, wherein the hole or another hole in at least one slot connected to the tube is configured to receive a pressure monitor that monitors air pressure within the continuous internal volume during an inspection of the airship structure.

Example 16: the airship structure of Examples 14 or 15, wherein the pressure monitor is configured to monitor the air pressure within the continuous internal volume to detect defects in the plurality of joints and the tube.

Example 17: the airship structure of any one of Examples 14 to 16, wherein the continuous internal volume is a single airtight volume when all holes in the slots connected to the tube are sealed to prevent air from escaping through the holes.

Example 18: the airship structure of any one of Examples 14 to 17, further including (or: comprising): a second continuous internal volume formed by one or more second tubes and a second plurality of joints; and a bridge connection assembly having an air bridge tube, wherein a first end of the air bridge tube is coupled to the continuous internal volume via a first hole, and a second end of the air bridge tube is coupled to the second continuous internal volume via a second hole.

Example 19: the airship structure of Examples 18, wherein the bridge connection assembly includes (or: comprises) a valve disposed along the air bridge tube, wherein the valve is configured to selectively connect and disconnect the continuous internal volume and the second continuous internal volume.

Example 20: the airship structure of any one of Examples 14 to 19, wherein the plurality of joints and the tube form at least a section of a longeron of the airship structure.

Example 21: the airship structure of any one of Examples 14 to 20, wherein the plurality of joints and the tube form at least a section of a mainframe of the airship structure.

Example 22: the airship structure of any one of Examples 14 to 21, wherein at least one of the plurality of joints has at least one additional slot different from the plurality of slots of that joint.

Example 23: the airship structure of any one of Examples 14 to 22, wherein the plurality of joints have different numbers of slots or slot configurations.
FIG. 1A illustrates an example of the structure of a rigid airship.
FIG. 1B illustrates an example of selected structural locations designed for a pressure inspection system, according to particular embodiments.
FIG. 2A illustrates an example of a mainframe of a rigid airship.
FIG. 2B illustrates a cross-section view of selected volume(s) for pressure inspection, according to particular embodiments.
FIG. 3A illustrates an example of a portion of a mainframe of an airship structure, according to particular embodiments.
FIGS. 3B-3C illustrate a perspective view of a section of a mainframe, according to particular embodiments.
FIG. 3D illustrates a cross-section view of a section of a mainframe, according to particular embodiments.
FIG. 3E illustrates a cross-section view of an interface section between a joint and a tube, according to particular embodiments.
FIGS. 3F-H illustrate airflow through volumes defined within a joint and connecting tubes, according to different embodiments.
FIG. 3I illustrates a bridge connection assembly for segmenting a large volume.
FIG. 4 illustrates an example of a setup of multiple bridge connection assemblies for pressure inspection, according to particular embodiments.
FIG. 5 illustrates an example of an installation of a plug, according to particular embodiments.
FIG. 6A illustrates different plots of normalized pressure versus dwell time for different inspection volumes.
FIG. 6B illustrates different leak rates for different inspection volumes.
FIG. 7 illustrates an example of a Ground Support Equipment (GSE) manifold assembly for a pressure inspection system.

Embodiments described herein provide an airship structural design and techniques for performing pressure decay inspection for an airship. These techniques have been demonstrated to be fast and effective in detecting leakage or damage in an airship's composite and metallic elements and their joining connections. Sections of the airship (e.g., the longeron sections or any other sections of interest) are designed to form air-tight interior volumes. During inspections, an air-tight volume would be pressurized, and the pressure can be monitored over a period of time to detect leaks. The existence of leaks could signal defects or damages in the structural components forming the volume. Once the pressure decay data is collected, the section will be depressurized. If the pressure decay exceeds a certain threshold or matches a particular decay profile that signifies leakage, a more rigorous inspection may be initiated to localize the leaks. In particular embodiments, the volumes could be selectively connected or isolated to aid in the process of localizing the damaged area.

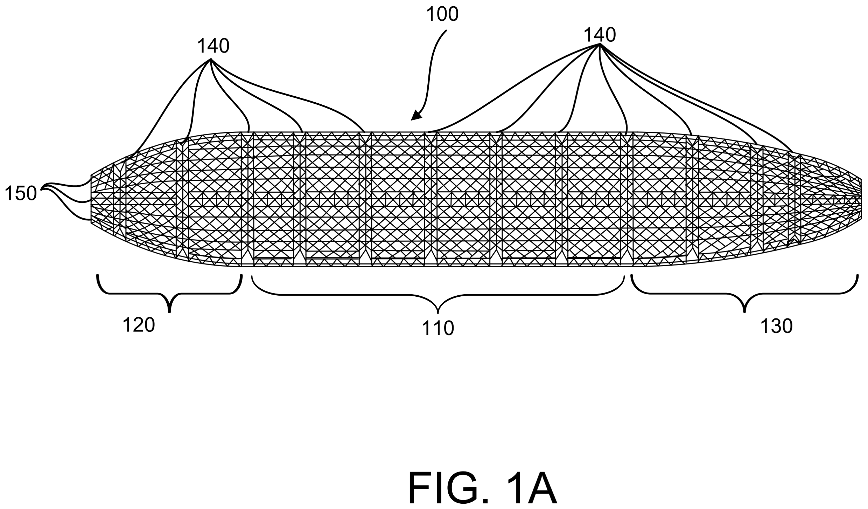

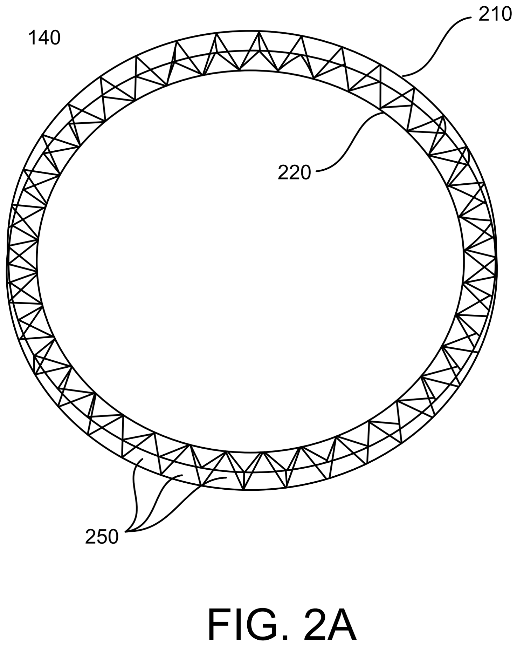

Particular embodiments described herein generally relate to the structure and design of elements used for building rigid or semi-rigid airships. FIG. 1A illustrates an example airship structure 100 of an airship. The airship structure 100 can comprise a uniform hull section 110, a tapered bow section 120, and a tapered stern section 130 to which the airship's rudder(s) or fin(s) can be attached. The airship structure 100 can comprise multiple main transverse frames or mainframes 140. In particular embodiments, each mainframe 140 is substantially circular (see FIG. 2A) and composed of interconnected apex joints, base joints, apex tubes, mainframe transversal tubes, and longeron tubes. The mainframes 140 can be interconnected using hull sections, which may be constructed using a combination of longerons and geodesic structures. The airship structure 100 may be constructed using smaller components, such as interconnected joints and tubes. The present disclosure provides particular designs of the airship structure 100 and associated techniques for inspecting its integrity.

The present disclosure provides a pressure structure inspection (PSI) system to detect structural damages by measuring the decay of air pressure injected within sections of the airship's frame. The high-level principle is to inject pressurized air into a selected volume formed within the structural components of the airship structure 100 and measure the pressure for a period of time. Any observed decay in pressure exceeding an expected level or rate signals failures in the portion of the airship structure 100 forming the selected volume. For example, low air pressure may be caused by air escaping the selected volume due to defects and damages in the components or bonding between interconnected joints and tubes. The inspection system has been demonstrated to be quick and minimally invasive, making it particularly suitable for inspecting airships.

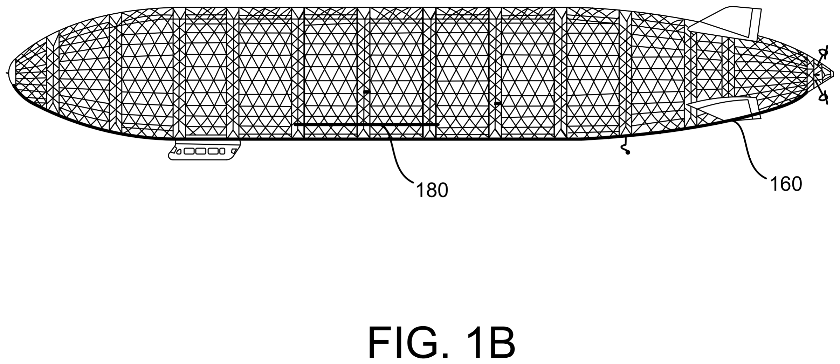

Any suitable portion of the airship structure 100 may be constructed using the techniques described herein to facilitate PSI inspection. For example, the most critical sections of the airship may be constructed using the tubes and joints described herein to form interior volumes for PSI inspection (e.g., such critical sections may be along a longeron at the bottom of the airship or other load-bearing portions that are susceptible to degradation or damage). For example, FIG.1B shows an illustrative scheme of the locations where tubes and joints may form volumes for PSI inspection. One such location is a longeron section 160 located along the bottom of the airship, from the nose cone to the tail portion of the airship. As another example, the highlighted segment 180 may additionally or alternatively be constructed using the techniques described herein to enable PSI inspection.

In particular embodiments, the tubes and joints forming the entire length of longeron section 160 or segment 180 may form a continuous volume. Such a design allows a large portion of the airship structure 100 to be inspected in one PSI test, but isolating the damaged area would be difficult. Thus, in another embodiment, the volumes along the longeron section 160 and segment 180 may be selectively divided into smaller volumes for inspection. This allows an inspector to gradually narrow down the search area to isolate the problem areas. For example, an inspector may initially use PSI to monitor the pressure within the entire length of longeron section 160 and determine if a leak exists. The inspector may then repeat the PSI inspection on a smaller portion of longeron section 160, such as its first half. If the PSI inspection indicates that no leak exists in the first half, the inspector could surmise that the leak is likely in the second half of the longeron section 160. This process may repeat (e.g., via a binary search) until the region selected for inspection is small enough for the inspector to locate the problem areas. While FIG. 1B provides specific examples where portions of the airship's longitudinal structure may be designed for PSI inspection, it should be noted that the techniques described herein could be applied to other portions as well (e.g., the volume tested using PSI may be a portion of a mainframe 140, a combination of a mainframe 140 and hull section 110, or any other interconnected portions of the airship structure 100).

Particular embodiments allow volumes defined by tubes and joints to be selectively connected and disconnected. For example, the longeron section 160 may include thirteen subsections, each having its own isolated volume. Each of the subsections may have one or more holes (e.g., a borescope hole). A tube may connect one subsection's hole to another subsection's hole to effectively connect their respective volumes, which are otherwise isolated from one another. In this manner, the subsections whose volumes are interconnected may be inspected at the same time. For example, if each of the thirteen subsections of the longeron section 160 is connected to its adjacent subsection(s), the entire longeron section 160 may be inspected with a pressure inspection. If air leakage is detected, the inspector may then selectively disconnect the subsections. For example, by disconnecting the tube connecting the seventh and eighth subsections, the volume along the longeron section 160 will be divided into two (i.e., one volume corresponds to the first to seventh interconnected subsections, and another volume corresponds to the eighth to thirteenth interconnected subsections). These two smaller subsections may then be inspected individually. If a leak is detected in the first smaller subsection but not the other, then the inspector may focus on the first smaller subsection and repeat the process of segmenting its volume until the leakage is isolated to a particular subsection.

FIG. 2A illustrates an example of a mainframe 140 of an airship structure 100. The mainframe 140 can comprise an outer portion 210 and an inner portion 220. In particular embodiments, the mainframe 140 can be constructed using pyramid structures 250. Each pyramid structure 250 can have a base and an apex. In particular embodiments, the pyramid structures 250 can be configured so that their apexes point toward the center of the mainframe 140 and their bases face outwards. In this configuration, the outer portion 210 of the mainframe 140 is formed by the connectors that form the bases of pyramid structures 250, and the inner portion 220 of the mainframe 140 is formed by the connectors. In the embodiments, the connectors can be tubes. Any portion of the mainframe 140 may be constructed using joints and tubes to define volumes for PSI inspection. For example, the circle formed by the inner portion 220 of the mainframe 140 may form a volume. As another example, one or more interconnected pyramid structures 250 or portions thereof could form a volume for PSI inspection.

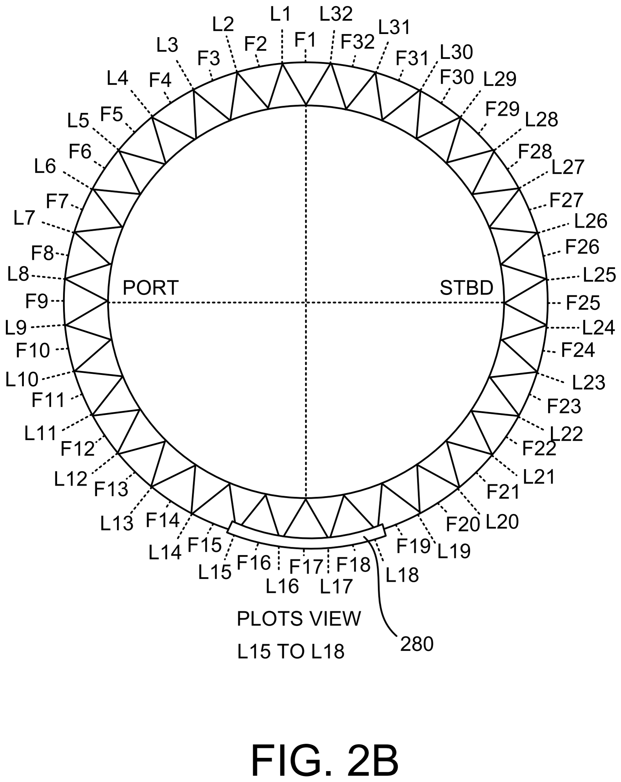

FIG. 2B illustrates an example of a portion of a mainframe 140 configured to have an internal volume that enables PSI inspection. For example, section 280, which covers segments L15-18, is at the bottom of an airship. Section 280 can comprise structural elements, e.g., composite tubes, adhesive bonds, and welded joints, with interior structures that form an isolated volume for PSI inspection. As previously described, the tubes and joints used to construct section 280 may form a single volume. Alternatively, the tubes and joints used to construct section 280 may form separate volumes that could be selectively connected and disconnected via tubes. Such a changeable design can be effective in implementing a rapid and efficient inspection according to different purposes and requirements.

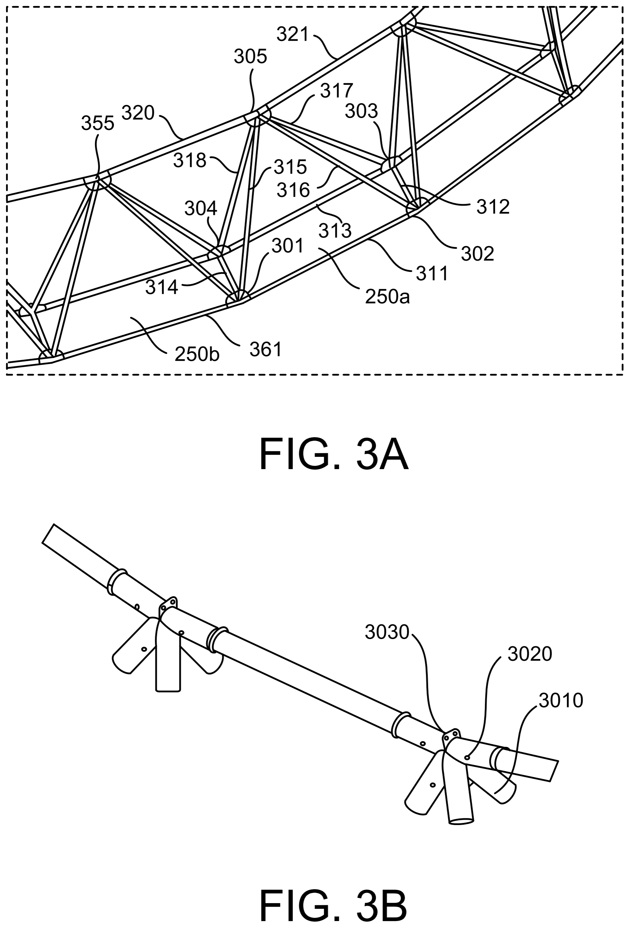

FIGs. 3A-3I provide further details on the joints and tubes of an airship structure that, when assembled, can form interior volumes to facilitate PSI inspection.

FIG. 3A illustrates an example perspective view of a portion of a mainframe 140. In particular embodiments, each pyramid structure (e.g., 250a and 250b) used for building the mainframe 140 can have four base joints (e.g., 301, 302, 303, and 304) forming the base of the pyramid (e.g., 250a) and an apex joint (e.g., 305) forming the apex of that pyramid. In particular embodiments, tubes (also known as connectors) can connect the joints to form a pyramid structure 250. For example, a pyramid's 250a base can be formed by a tube 311 connecting base joints 301 and 302, a tube 312 connecting base joints 302 and 303, a tube 313 connecting base joins 303 and 304, and a tube 314 connecting base joints 304 and 301. The pyramid's 250*a* sides can be formed by tubes 315, 316, 317, and 318 connecting the apex joint 305 to the base joints 301, 302, 303, and 304, respectively. In particular embodiments, the mainframe 140 can be constructed using adjacent pyramid structures 250. For example, between two adjacent pyramids 250, one tube (e.g., 314) can be shared between the bases of the two pyramids 250a and 250b. In such a configuration, two adjacent pyramids can share one base tube and two corresponding base joints. For instance, FIG. 3A shows the base joints 301 and 304 and their tube 314 being shared by the two labeled pyramids 250a and 250b. In particular embodiments, the apex joints (e.g., 305 and 355) of adjoining pyramids (e.g., 250a and 250b, respectively) can be connected by an apex tube 320. In particular embodiments, the structural pattern of interconnected pyramid structures 250 described above repeats through the entire mainframe 140. In particular embodiments, the joints can be configured to create a circular mainframe 140. For instance, the apex joint 305 can be configured so that its slots for receiving apex-to-apex tubes 320 and 321 can be angled with respect to each other to form a corner of a polygon that approximates the interior of a circular mainframe 140. Similarly, each of the base joints (e.g., 301-304) can be configured so that its two slots for receiving base tubes forming respective sides of adjacent pyramids can be angled with respect to each other to form a corner of a polygon that approximates an exterior of a circular mainframe 140. For example, base joint 301 can have slots along multiple directions toward different angles so that tubes 311 and 361 form a corner of a 36-sided polygon. Further details of the joints' configurations are provided below. Notably, either base joint or apex joint can be configured as a hub element with a plurality of slots for receiving multiple tubes from different directions, ensuring the proper geometry for assembling the mainframe. In particular embodiments, a base joint can be configured to have at least five slots, and an apex joint can be configured to have at least six slots. In such a way, combinations of base joints and tubes thereof along the circumference direction constitute the outer portion 210 of the mainframe 140, and a combination of apex joints and tubes along the circumference direction constitute the inner portion 220 of the mainframe 140. Accordingly, the interactive combinations between base joints and apex joints through tubes constitute the main body of the mainframe 140. After a constitution of the mainframes 140, an envelope may be installed to cover the mainframes to establish the main body of an airship.

The tubes used for constructing an airship have several desirable characteristics. For example, the tubes should be lightweight to enhance fuel economy, have high strength to withstand the load of the airship and payload, be corrosion resistant, be easy to manufacture, and have low cost. Some examples include composite materials or metal alloys (e.g., aluminum or titanium). Particular embodiments of the tubes are constructed using solid laminate without a sandwich core material, while other embodiments are constructed by sandwiching a core material. As an example of the latter, the tubes can be constructed using a composite of carbon-fiber layers sandwiching another core material, such as honeycomb Nomex^{®} or any other suitable material with a high strength-to-weight ratio. For example, a tube can be cylindrical with a hollow cylindrical center. The outer and inner surfaces of the hollow cylindrical tube can be made of carbon-fiber layers, which can use sandwich core materials, such as honeycomb Nomex^{®}. In particular embodiments, the carbon-fiber layers can be prepreg carbon-fiber layers, approximately 0.5 mm to 0.75 mm thick, and the composite carbon-fiber tube can be approximately 30 mm to 40 mm in diameter. The sandwiched material can then wrap around a cylindrical mold until the material hardens to form the tube. The resulting tube has several desirable properties for airship construction, including, for example, strength, stiffness, and extremely lightweight. A person of ordinary skill in the art would appreciate that other methods of manufacturing the composite tubes may also be used, including those that do not involve sandwiching a core material.

FIG. 3B illustrates a detailed perspective view of interconnected joints and tubes that form a portion of the mainframe 140. In the detailed view, the joint can be an apex joint with a plurality of slots 3010 (e.g., six slots are shown in the illustrated example) for receiving tubes. Using FIG. 3A as an example, an apex joint 305 may have six slots for receiving six tubes. The two slots shown on the top of apex joint 305 connect to tubes 320 and 321. Furthermore, the apex joint 305 has four slots configured to connect to tubes 315-318. Returning to FIG. 3B, one or more slots of a joint can have a hole 3020. Depending on the application or need, the holes 3020 can be selectively sealed off by a plug to create a sealed internal volume or receive a manifold for the PSI system (i.e., the PSI system could inject air and/or measure pressure via the holes 3020). As previously described, the holes 3020 may also be used to connect multiple volumes during PSI inspection to improve inspection efficiency. Furthermore, each joint may have one or more inner segmentation member 3030 to define the segmentation joint's internal volume. While FIG. 3B shows that segmentation member 3030 is visible on the exterior of the joint, but other embodiments of segmentation member 3030 would not be visible from the outside. Internal details of the structure of the joint are described below.

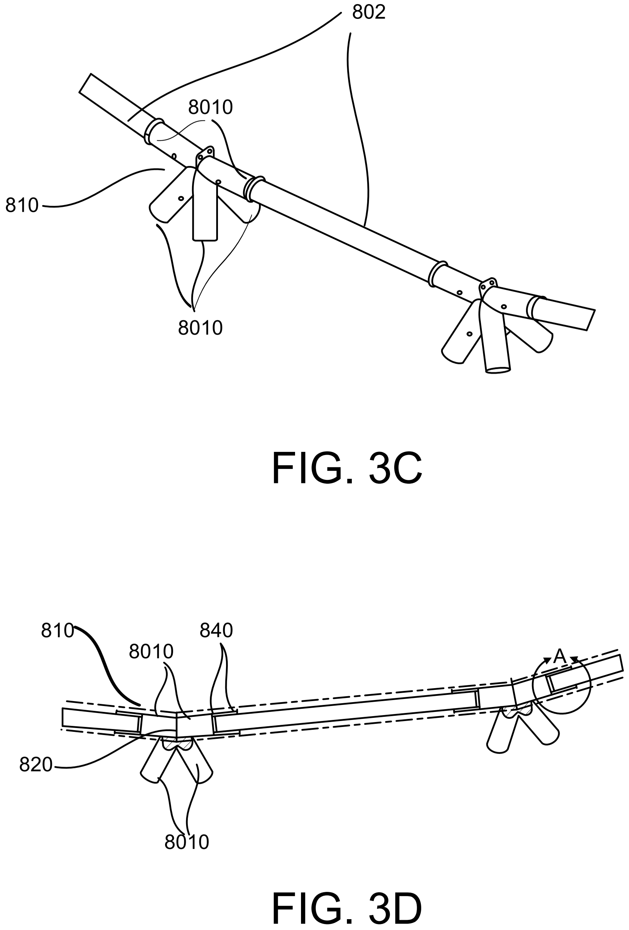

As discussed, one object of the present disclosure is to provide joints with segmentation members therein to define internal volumes for facilitating PSI inspection. By choosing appropriate joints with the desired internal segmentation members and segmented volumes, the interior structure of a series of interconnected joints and tubes would define a volume for PSI inspection. FIGS. 3C-3E provide an exemplary schematic view of setting up a segment of a selected volume for PSI inspection.

FIG. 3C provides a perspective view of an exemplary portion of an airship structure. Composite tubes 802 are connected with each other via a joint 810, which could be constructed using metal. The joint 810 has multiple slots 8010 for receiving composite tubes 802. A joint can have any number of slots oriented in different directions. Joints used for different portions of the airship may have different slot configurations. For example, FIG. 3C shows an apex joint with slots configured to receive tubes that form the sides of a pyramid structure, as well as tubes that connect the apex joint to other apex joints of adjacent pyramid structures. The base joint used by a pyramid structure has a different configuration of slots. For example, referring to FIG. 3A, base joint 302 may have five slots. Three slots (shown on the left side of the joint 302) are configured to connect to tubes 311, 312, and 316. The other two slots (shown on the right side of the joint 302) are configured to form a corner of the adjacent pyramid structure. As these examples illustrate, the particular number and configuration of slots of a joint depends on the intended location of the joint within a desired geometric structure.

FIG. 3D provides a cross-section view of FIG. 3C (the cross-section is along a plane that cuts through the joint 810 and tubes 802 from top to bottom). In this example, joint 810 may be formed by welding together six metal slots 8010 (two are not shown in this cross-sectional view). Each slot 8010 may be substantially cylindrical to receive cylindrical tubes. The interior of each slot 8010 may have a cylindrical cavity (the interior geometry of the slots depends on the exterior geometry of the tubes). Depending on the desired internal volume formed when a joint 810 is connected with other joints 810 via tubes 802, the internal cavities of the slots 8010 may be optionally isolated during construction. For example, an internal segmentation member 820 may isolate the internal cavities of the top two slots 8010, as shown in FIG. 3D from each other so that air in the cavity of one slot 8010 cannot flow into the cavity of the adjoining slot 8010. In a similar manner, additional segmentation members may isolate any one or more of the other slots 8010 from each other. For example, in FIG. 3D, one or more segmentation members may isolate the three slots 8010 on the left (only two are visible in the cross-sectional view) from the three slots 8010 on the right (similarly, only two are visible). In this configuration, the slots on the left may form one connected interior volume, and the slots on the right may form another connected interior volume. As another example, the two slots on the top may form one connected volume, the two bottom slots on the left side (one of which is not visible in the cross-sectional view) may form a second connected volume, and the two bottom slots on the right side (one of which is not visible in the cross-sectional view) may form a third connected volume. The first, second, and third volumes may be isolated from one another internally. The segmentation member 820 may be positioned within a joint 810 in any suitable manner. For example, a segmentation member 820 may be welded between the interface of the slots 8010. As another example, a segmentation member 820 may be plastic or rubber inserted and bonded to the interior surface of the slots 8010.

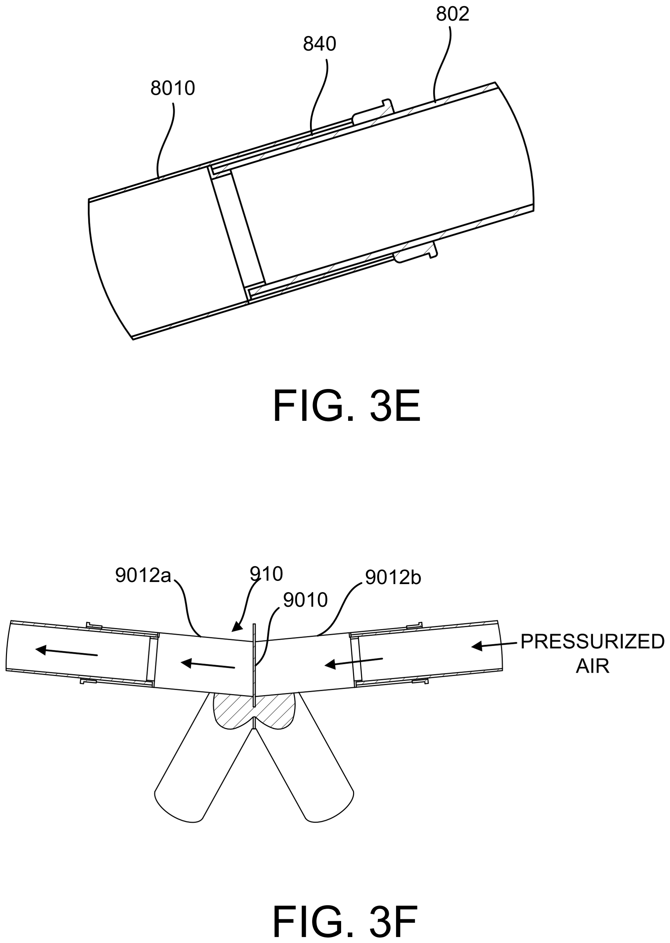

FIG. 3E shows a cross-sectional view of the interface between a slot 8010 and a tube 802. Once inserted, a tube 802 may be bonded to a slot using any suitable bonding material. For example, an epoxy filling 840 may be injected into the annular void at the interfaces between the inner wall of a slot 8010 and a connection tube 802, thereby securing the two components and sealing any gaps at the intersection to make the connection airtight during inspection.

FIGs. 3F-3H illustrate airflow within different embodiments of a joint. As discussed, a network of interconnected joints and slots defines interior volumes for PSI inspection. For example, a particular volume may be defined by (1) two or more end joints with slots that terminate the volume and (2) tubes that connect the end joints via one or more internal joints. The slots of those internal joints used by such tubes are fluidly connected (i.e., not segmented to prevent airflow). FIG. 3F shows the cross-section of a first joint 910 with continuous volume. The first joint 910 has several slots, including slots 9012a and 9012b. In this implementation, the joint 910 is designed to allow airflow to pass between the interior of first slots 9012a and 9012b (depicted by the arrows representing pressurized air traveling from right to left), thereby creating a continuation of volume segments. The joint 910 may include a segmentation member 9010, located between slots 9012a and 9012b, that has a pass-through hole to enable internal fluid connectivity between first slots 9012a and 9012b. The segmentation member 9010 may be made of metal, rubber, or any other suitable material that is not permeable. Alternatively, the first slots, 9012a and 9012b, may be welded together without any additional members inserted between them.

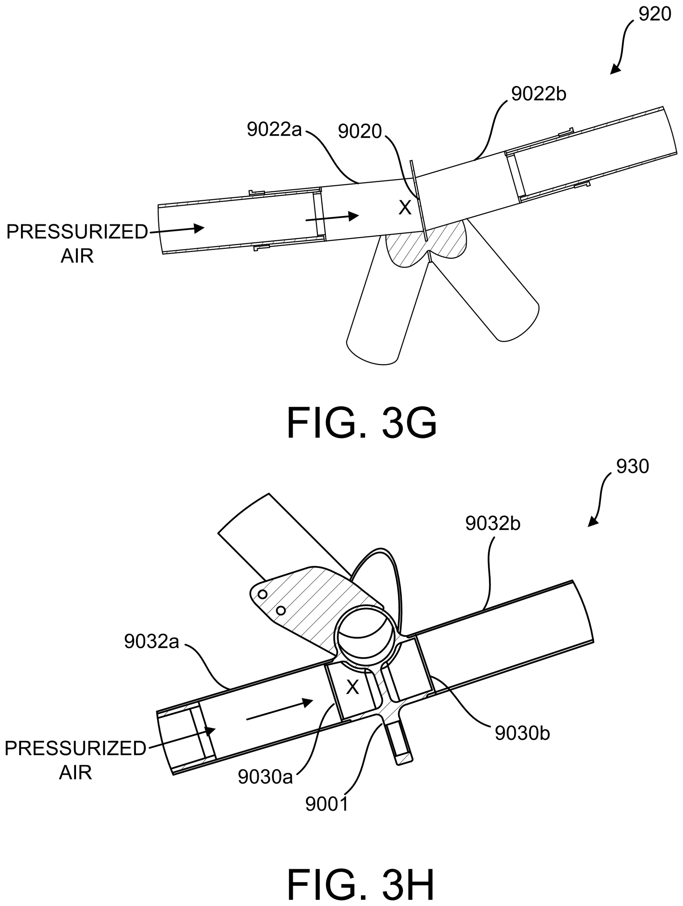

FIG. 3G illustrates a second joint 920 with segmented volumes. In particular, the second joint 920 is designed to isolate the interior cavities of second slots 9022a and 9022b. The second joint, 920, includes a segmentation member 9020 disposed between the welded slots 9022a and 9022b to terminate the volume segment on either side. The segmentation member 9020 does not have any holes to allow air to pass through. The segmentation member 9020 may be welded to the first slots 9022a and 9022b so that all seams are covered to provide an airtight seal. As shown in the figure, air injected into slot 9022a is blocked by the segmentation member 9020 and cannot flow into slot 9022b.

FIG. 3H shows an example of an alternative joint 930 with segmented volumes. In this example, the joint 930 has at least a pair of slots (e.g., 9032a and 9032b) coupled together via a hub 9001. The hub 9001 has two openings 9030a-b configured to receive slots 9032a-b, respectively. As shown, the openings 9030a-b do not share a continuous volume due to the divider within the hub 9001. As such, air entering one slot 9032a would be blocked by the interior design of the hub, which prevents the air from entering the other slot 9032b.

It should be noted that the joint configurations shown in FIGs. 3A-3H are intended to provide examples of joints having internal structures that either segment their interior volume segments or allow the volume segments to be continuous. One of ordinary skill in the art would recognize that this principle could be applied to other joints as well, depending on each joint's location within a frame and the desired configuration of volumes for PSI inspection. In addition, different combinations of slots could be connected/disconnected differently as well. For example, if a joint has slots #1-7, slots #1 and #2 might have a first continuous volume, slots #3 and #4 might have a second continuous volume, and slots #5, #6, and #7 might have a third continuous volume. The first, second, and third volumes could be isolated from one another.

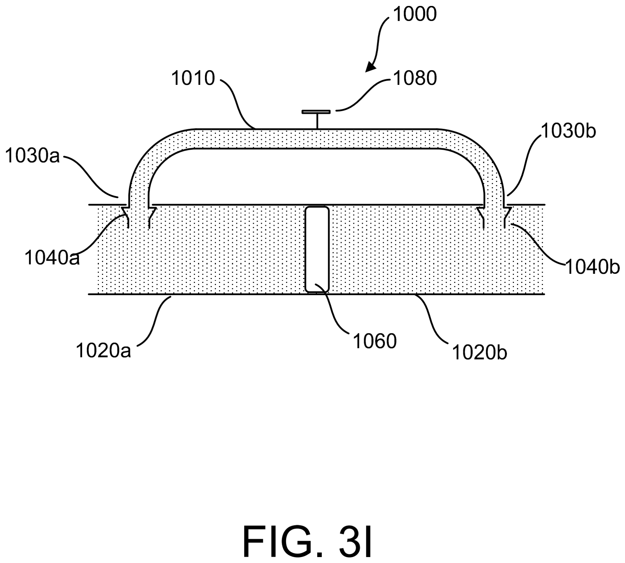

FIG. 3I illustrates an example where a bridge connection assembly is applied to two segmented volumes in order to provide a mechanism to selectively connect and disconnect the two volumes. As illustrated, a bridge connection assembly 1000 includes an air bridge tube 1010 having an on/off valve 1080. The bridge tube can be a central hollow tube with a flexible shape, having two open ends. The bridge connection assembly 1000 may be installed onto two segmented volumes. The segmented volumes could be isolated volumes within the same joint or different joints. FIG. 3I illustrates an example where the segmented volumes are part of the same joint. The two segmented volumes correspond to two slots 1020a-b, which are divided or separated by a closed internal interface 1060 in the joint. Thus, the internal volumes of the two slots 1020a-b are segmented or isolated from one another.

The bridge connection assembly 1000 may be installed to provide a switchable mechanism to connect and disconnect the segmented volumes of the two slots 1020a and 1020b. In particular, the two slots 1020a and 1020b have holes 1030a and 1030b, respectively. The two ends of the air bridge tube 1010 are inserted into the holes 1030a and 1030b. The two ends of the air bridge tube 1010 may be secured to the holes 1030a and 1030b in an airtight manner. For example, a plastic barbed tube fitting 1040a or a 90-degree push-to-connect fitting may secure one end of the air bridge tube 1010 to hole 1030a, and a similar barbed tube fitting 1040b or a push-to-connect fitting may secure the other end of the air bridge tube 1010 to hole 1030b. When it is desirable to isolate the two volumes, an inspector could close the on/off valve 1080 to block airflow between the two volumes. Conversely, when a continuous volume is desired, the inspector could open the on/off valve 1080 to allow air from one volume to pass into the other volume. Such a bridge connection assembly 1000 has been determined to efficiently localize defective areas. For example, an inspector may initially open the on/off valves to create a large continuous volume from several segmented volumes. Through a single PSI inspection, the inspector would be able to determine whether there are any failures within the large segment tested. If the pressure test fails, the inspector could then selectively close some of the on/off valves to create smaller continuous volumes and repeat the PSI inspection process. The inspector could continue isolating the problem until the damaged area is found.

Internal volumes for PSI inspection may be strategically created along the airship. For example, certain parts of the airship's frame may be considered as the primary structure (e.g., non-redundant elements), different from the secondary structure (e.g., redundant elements). The primary structure may require more stringent and frequent inspections than the secondary structural elements. In particular embodiments, the primary structure may be located on a longeron at the bottom of the airship (see FIG. 1B, longeron section 160). Thus, the longeron section may be constructed with the joints and tubes described herein to form interior volumes configured for PSI inspection.

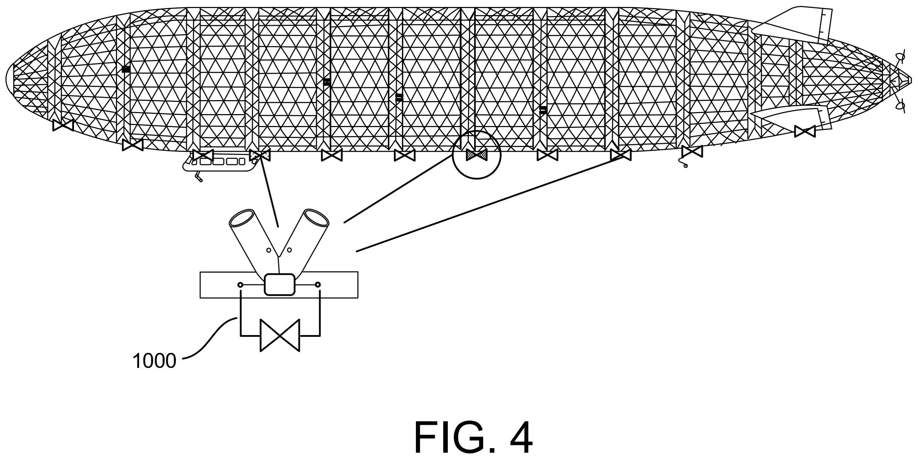

FIG. 4 shows an example configuration of segmented volumes with bridge connection assemblies 1000. The bridge connection assemblies 1000 may each have an on/off valve 1080. In FIG. 4, the longeron along the bottom of the airship has a series of segmented internal volumes. A bridge connection assembly 1000 connects each adjacent pair of segmented volumes, allowing them to be selectively connected to form larger continuous volumes. As previously discussed, an inspector may selectively close or open the valves of the bridge connection assemblies 1000 to create volumes of different sizes. This provides the inspector with an efficient way to localize problem areas.

One of the objectives of the PSI installation is to establish a completely sealed longeron section on the airship. Upon the sealed longeron section, the pressurization can be actuated, and the pressure can be monitored in real time at regular inspection intervals. Failures, including barely visible impact damage (BVID) and larger failures on carbon fiber reinforced polymer tubes (CFRP) and/or weld failures and adhesive failures, will present a decay in the pressure over the monitoring time because the pressurized source, e.g., pressured air, will leak through failures when the longeron section is pressurized. The monitoring of the depressurization data, e.g., the degree of the pressure decay in the selected volumes, signifies potential leakage due to a defect or damage in the airship's structure. Once a leakage is confirmed in a selected volume, the next challenge is to locate the leak. For example, when pressure on the longeron drops beyond a predetermined threshold, a more rigorous structure inspection may be initiated to locate the leaks so that damages can be assessed. Furthermore, all the testing data can be reviewed for subsequent analysis, e.g., on estimating the correlation between pressure decay and failures, via a data analysis tool, e.g., a data acquisition system.

An exemplary installation for a pressure decay inspection system of the disclosure can include but is not limited to, the following hardware or materials: grommet, push-to-connect fitting (e.g., 90-degree push-to-connect fitting), barbed tube fitting (e.g., also known as barb or air barb), polyurethane hose (e.g., also known as polyurethane tube hose), plug, quick disconnect fittings (e.g., also known as QD), Vectran (cord), PTFE tape, on/off valves, and certain accessories, e.g., clamps and crimps.

In an exemplary inspection procedure, some volumes of a longeron section are selected, e.g., L15-L18, and each of these volumes is marked as an independent volume for inspection. For example, the volume L15-L18 can be segmented into 16 volumes. Generally, the segmented volumes can be connected into a large, continuous volume via connection between different segmented volumes (e.g., using a bridge connection assembly discussed above). To establish a large integrated volume for an overall inspection for failures, an on/off valve on the bridge connection assembly may be opened or closed to control a connection or disconnection between different segmented volumes. When the valve is on, an integrated large volume is established, which can facilitate a quick and efficient inspection for the large volume, e.g., L15-L18, to determine if a leakage exists.

To localize leakage, the large volume may be segmented into smaller ones by closing one or more of the bridge connection assemblies. The smaller volumes in the selected volume L15-L18 can be inspected simultaneously. For example, each of the smaller segmented volumes can be equipped with an independent PSI system. In this inspection scenario, each segment volume can have an independent connection to the inspection system, including a GSE, manifold, monitor gauge, etc.

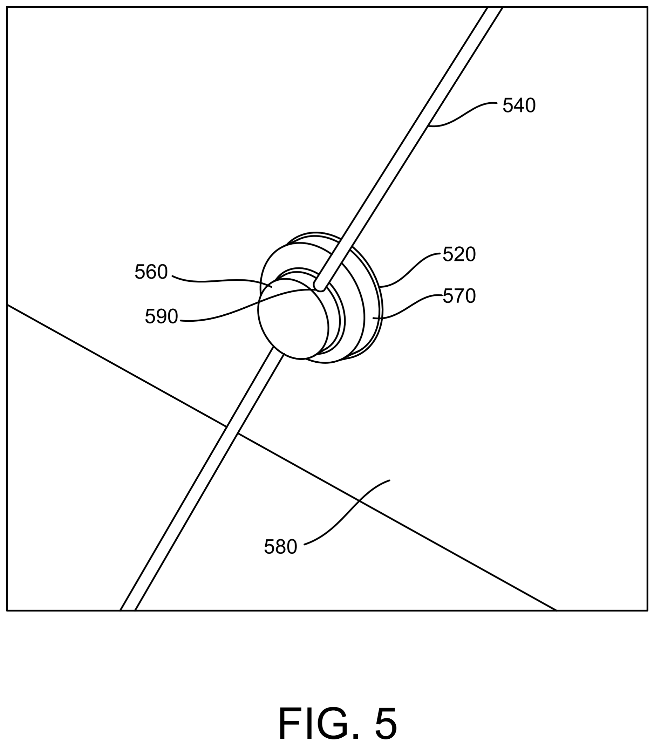

To create a completely segmented volume(s), plug assemblies may be used to seal the holes on the joints (shown in FIG. 3B). Referring to FIG. 5, the plug assembly may include a grommet 570, a plug 560 (e.g., an air barb, rivet, or any other fastener that could secure a grommet 570 to a hole), and a safety cord 540. All components that seal the longeron section, such as grommets and air barbs, can stay attached to the selected volume(s) of the airship, even in flight. During a PSI inspection, certain plugs may be removed to allow ground service equipment (GSE) to inject air pressure into volumes and measure the pressure therein. In particular embodiments, only one hole per selected volume from L15-L18 is used for the air stem. All other holes may remain sealed.

Referring to FIG. 5, a plug assembly may be installed as follows. A technician selects a hole 520 of a slot 580 of a joint. The hole 520 is connected to the interior volume of that slot 580. Then, a grommet 570 is installed in the hole 520 as the sealing interface. An air barb or plug 560 is pushed into the grommet 570 through the inner diameter of the hole 520. Appropriate pressure may be required to seat the plug 560 tightly against grommet 570. Once installed, an eyelet hole 590 for the plug 560 shall be aligned circumferentially to the slot 580 to help enable installation of a cord 540 through the eyelet hole 590. After the plugs are installed, the cord 540 can be used as a supplementary retaining device to further ensure that the air barbs do not eject from the hole during over-pressurization. The cord 540 can be selected from the fiber cores with high strength, high modulus, and thermal stability at high temperatures(e.g., Vectran^{®}).

Once all the necessary hardware has been installed on the inspection system, a baseline test may be performed to obtain data (e.g., a pristine/baseline/nominal decay profile or baseline leak rate) against which future PSI inspections may be compared. Also, a complete baseline test can verify whether the hardware is installed correctly.

In particular embodiments, a baseline test may be performed as follows. After air pressure is injected into a selected volume, the pressure within the volume may be monitored. At the end of a pressure monitoring duration, if the pressure is above a "Go/No-Go pressure", the inspection segment can be considered airtight. Herein, the "Go/No-Go pressure " refers to a specific pressure threshold or limit that serves as a decision point, indicating whether an inspection volume is airtight after a period of pressure monitoring. When the pressure falls below the Go/No-Go pressure, it is an indication that the selected volume could have a defect, damage, or leak. At the end of a pressure monitoring duration, the pressure reading is then analyzed to determine the leak rate of the inspected volume. The leak rate is compared against the baseline leak rate, which is unique for each volume, to determine the pass/fail result of the inspection. If the newly reported leak rate increased, it is an indication that the selected volume could have a defect, damage, or leak. If so, the inspection may proceed with damage localization procedure.

The specific locations of leaks can be checked using a variety of techniques, such as the Sherlock^{®} leak detection fluid or any other suitable leak detection techniques. Herein, Sherlock^{®} refers to a type of leak detection fluid or leak detection solution commonly used in various industries to identify and locate leaks in systems. Leak detection fluids like Sherlock^{®} are specifically formulated to make it easier to visually detect leaks by producing bubbles or other visible indicators at the site of the leak. With the selected volume pressurized, a Sherlock^{®} leak detection fluid can be applied onto these suspect locations. Drips are controlled using clean towels to catch excess drips, and the test area is wiped for drying before moving on. For example, leakage can be detected and determined as fine bubbles that form around the grommet within durations, e.g., bubbles appearing within 30 seconds to a minute. If a leak has been detected, the location is noted, and the detection can be continued along the length of the inspection volume. Possible causes for leaks in the baseline testing can include grommets and/or plugs being destroyed during installation or the cord being installed too tightly, which can constrain the plug from seating on the grommet. One of ordinary skill in the art would appreciate that other leak detection techniques may be used in addition to or instead of the aforementioned fluid-based technique. For example, leaks could be detected based on sound, such as by a technician listening for leakage-related sounds (e.g., a hissing sound) either with their ears or using an ultrasonic leak detector. Additionally or alternatively, a technician might visually detect gross damage and isolate problem areas using their eyes or with the aid of computer vision techniques. Any of these methods can be employed independently or in combination to identify the location of leaks.

After a complete baseline testing for the selected volume(s), a necessary repair and fixation should be applied. For example, the grommets and plugs at all identified leak locations should be replaced, and leaks coming from connections at the fittings on the GSE with PTFE tape should be re-sealed if necessary. Once all repairs have been performed, a baseline pressurization check can be repeated until the detected pressure is maintained above the threshold "Go/No-Go" pressure.

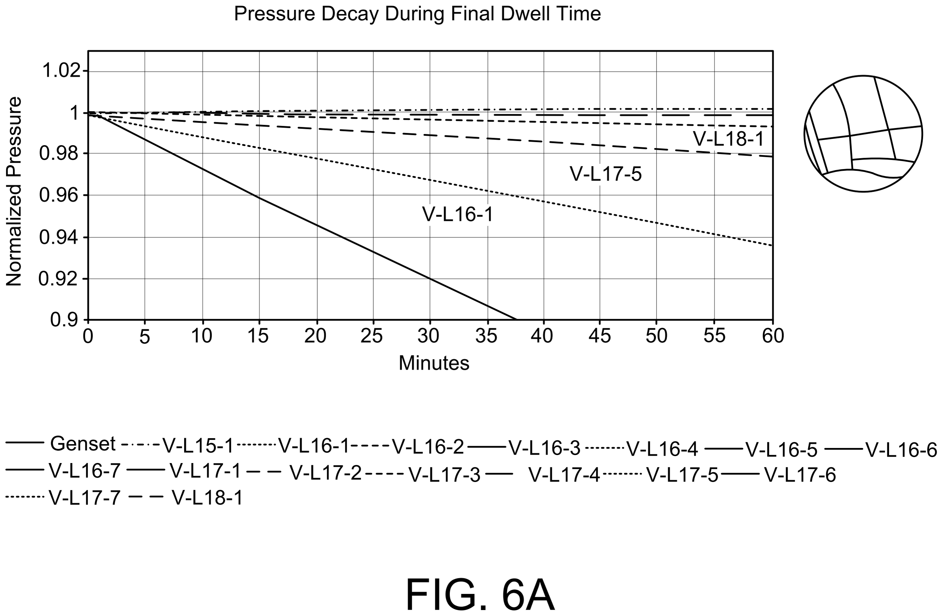

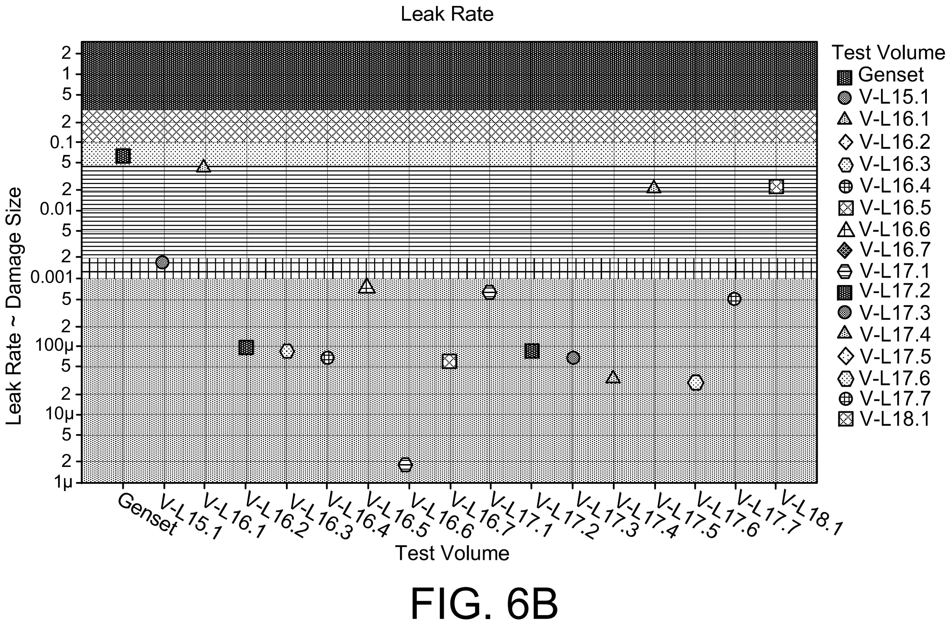

Another object of the disclosure is to provide a reliable estimation of failure size for pressure decay inspection. In particular embodiments, the failure size can be estimated using an exponential fitting, where the pressure drop value or rate is calibrated to a function of initial pressure, volume, and failure size. FIG. 6A shows, in particular inspections, some exemplary calibrated plots of pressure decay during dwell time at different selected volumes (segments) in the volume L15-L18. The characteristic of a pressure decay plot, also noted as the pressure decay rate, is a measure of the rate at which pressure within a system decreases over time. This rate is typically expressed in units of pressure per unit of time, such as psi per minute or pascals per second, depending on the units used for pressure and dwell time. FIG. 6B shows a data map for the leak rate with different segments.

The basis of the estimation method for failure size is based upon an orifice equation. The basic orifice equation, also known as the orifice discharge equation, describes the relationship between the flow rate (Q) of fluid through an orifice, the area of the orifice (A), the pressure difference (ΔP) across the orifice, and various fluid properties such as density (ρ) and viscosity (µ). One of ordinary skill in the art would appreciate that any suitable method for computing damage size based on pressure decay may be used.

An example procedure of a pressure decay inspection for an airship, in accordance with particular embodiments, is provided herein. The preset procedure before starting the inspection can comprise the above installation for hardware and supplies, such as location identification, grommet, plug, cord, push-to-connect port, and deviation (interference). A suitable pressure level may be used as an initial pressure of P₀. An inspection for an integrated or large volume, e.g., L15-L18 can be implemented for a rapid determination of possible failures in the large volume.

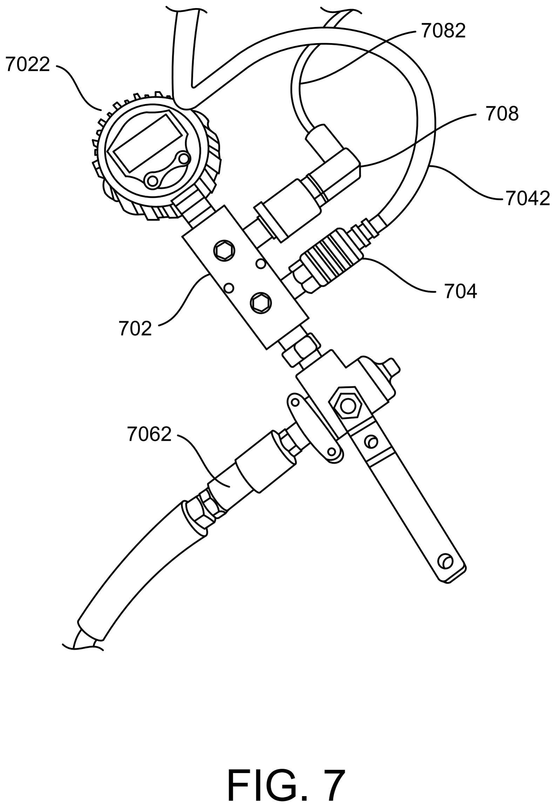

In certain embodiments, before running an inspection procedure, a technician may set up an inspection system. FIG.7 illustrates an exemplary GSE manifold assembly and connection setup of the inspection system for the test setup. In particular, a manifold assembly 702, including a gauge 7022, is used to manage the distribution, redirection, or regulation of fluids, gases, or other tubes. The manifold assembly 702 comprises multiple interconnected channels, pipes, or tubes designed to control the flow of substances within a system. In this example, a polyurethane hose assembly 704 with a polyurethane hose 7042 is connected with the manifold assembly 702 to deliver compressed air from the GSE manifold to the selected volume in the airship structure (e.g., through a hole 520 in a slot). The length of the polyurethane hose 7042 depends on the location of the joint selected for pressurized gas delivery. To secure the polyurethane hose assembly 704 to the manifold assembly 702, a vibration-resistant pinch clamp and a quick-disconnect (QD) fitting can be used for the connection. As pressurized air is injected into the volume being tested, pressure will mount in the manifold assembly 702. A pressure transducer 708 coupled to the manifold assembly 702 converts pressure in the manifold assembly 702 into an electrical signal. The pressure transducer 708 then sends the electrical signal corresponding to the measured pressure to a data acquisition system (DAQ), which is not shown in FIG. 7 for simplicity, via a signal cable 7082.

Accordingly, an air compressor can be connected with the manifold assembly 702 via a compressor connection assembly 7062 to provide pressurized gas. The compressor connection assembly 7062 can include a socket QD, which connects to a side of the GSE manifold assembly 702.

In another embodiment, multiple GSE manifolds can be employed to concurrently inspect multiple volumes and reduce total inspection time. Accordingly, there is one hose assembly between the GSE manifold assembly and multiple female QDs which connects to the male QDs of the umbilical hose to minimize chances of parasitic leakages. A hose as short as practical should be used to improve measurement sensitivity and accuracy.

An exemplary inspection procedure can include, but is not limited to:
a. Ensure the on/off valve on the manifold is in the closed position.
b. Ensure the air compressor is connected to the manifold.
c. Connect the polyurethane hose to the manifold at the QD end on the manifold.
d. Connect the polyurethane hose (bare end) to the push-to-connect fitting at the push-to-connect fitting on the ship.
e. Connect the pressure sensor to the data acquisition system (DAQ) and the power supply.
f. Ensure the compressor is fully charged.
g. Begin recording on the DAQ.
h. Begin pressurizing the selected volume, which can include:
   1. Slowly open the on/off valve to allow the volume to begin pressurizing. Once the valve is fully opened, monitor the two pressure sensors to check whether they are aligned with each other. Once they begin approaching 100 psi, partially close the valve.
   2. Once the pressure reaches 100 psi (+5, -0 psi), the initial pressure P0, fully close the valve.
   3. Start recording the pressure.
i. Begin the dwell time for the inspection volume. If the normalized pressure is below 95 psi at the end of its dwell time, there is likely failure or a leak in the system.
j. Once the dwell time is complete, the volume can be depressurized as follows:
   1. Ensure the manifold is still in the closed position. Disconnect the compressor from the manifold.
   2. Open the on/off valve slowly to allow the inspection volume to vent pressure
k. Analyze the data by normalizing it to 100 psi, the initial pressure P0. If, during the dwell time for any of the inspection volumes, the normalized pressure dropped to below 95 percent of the starting pressure, then the volume has failed. This means that the volume has either
   1. A leak in the GSE equipment. Test this first by referring to steps a through d, or
   2. Through failures in one or multiple CFRP tubes or joints. Potential, expected, or confirmed failures should be determined at a selected volume L 15-18.

In practice, the leakage of the GSE equipment can be excluded via the baseline testing disclosed above. Furthermore, once a failure in an integrated selected volume, e.g., L15-18, is determined, an identification for leakage at a specific segmented volume can proceed as needed.

In addition to the various embodiments depicted and claimed, the disclosed subject matter is also directed to other embodiments having other combinations of the features disclosed and claimed herein. As such, the particular features presented herein can be combined with each other in other manners within the scope of the disclosed subject matter such that the disclosed subject matter includes any suitable combination of the features disclosed herein. The foregoing description of specific embodiments of the disclosed subject matter has been presented for illustration and description purposes. It is not intended to be exhaustive or to limit the disclosed subject matter to those embodiments disclosed.

## Claims

1. An airship structure, comprising:
one or more first joints, wherein each of the first joints comprises a plurality of first slots having an open internal interface therebetween such that the plurality of first slots are volumetrically connected internally;
a plurality of second joints, wherein each of the second joints comprises a plurality of second slots having a closed internal interface therebetween such that the plurality of second slots are volumetrically isolated internally; and
a plurality of tubes with hollow centers connecting the one or more first joints and the plurality of second joints to form a continuous internal volume within the airship structure, wherein each end of the tubes is inserted into either (a) one of the plurality of first slots of one of the one or more first joints or (b) one of the plurality of second slots of one of the plurality of second joints;
wherein at least one slot selected from the first slots or the second slots has a hole configured to receive air injected into the continuous internal volume to inspect the airship structure.

2. The airship structure of claim 1, wherein the hole or another hole in at least one slot selected from the first slots or the second slots is configured to receive a pressure monitor that monitors air pressure within the continuous internal volume during an inspection of the airship structure;
optionally, wherein the pressure monitor is configured to monitor the air pressure within the continuous internal volume to detect defects or damage in the one or more first joints, the plurality of second joints, and the plurality of tubes.

3. The airship structure of claim 1 or 2, wherein the open internal interface of each of the one or more first joints comprises a passageway that allows air to pass between the plurality of first slots of that first joint.

4. The airship structure of any of claims 1 to 3, wherein the closed internal interface of each of the plurality of second joints comprises an internal segmentation member that prevents air from passing between the plurality of second slots of that second joint.

5. The airship structure of any of claims 1 to 4, wherein the continuous internal volume is a single airtight volume when all holes in the plurality of first slots of the one or more first joints and the plurality of second slots of the plurality of second joints are sealed to prevent air from escaping through the holes.

6. The airship structure of any of claims 1 to 5, wherein a bonding material fills an annular void between each end of the plurality of tubes and one of the first slots or the second slots into which that end of the tube is inserted.

7. The airship structure of any of claims 1 to 6, further comprising:
a second continuous internal volume formed by a second plurality of tubes and a second plurality of joints; and
a bridge connection assembly having an air bridge tube, wherein a first end of the air bridge tube is coupled to the continuous internal volume via a first hole, and a second end of the air bridge tube is coupled to the second continuous internal volume via a second hole;
optionally, wherein the bridge connection assembly comprises a valve disposed along the air bridge tube, wherein the valve is configured to selectively connect and disconnect the continuous internal volume and the second continuous internal volume.

8. The airship structure of any of claims 1 to 7, wherein the one or more first joints, the plurality of second joints, and the plurality of tubes form at least a section of a longeron of the airship structure; and/or
wherein the one or more first joints, the plurality of second joints, and the plurality of tubes form at least a section of a mainframe of the airship structure.

9. The airship structure of any of claims 1 to 8, wherein:
at least one of the one or more first joints has at least one additional slot different from the plurality of first slots of that first joint; or
at least one of the plurality of second joints has at least one additional slot different from the plurality of second slots of that second joint.

10. The airship structure of any of claims 1 to 9, wherein:
at least one of the one or more first joints is different from other ones of the one or more first joints; or
at least one of the plurality of second joints is different from other ones of the plurality of second joints.

11. An airship structure, comprising:
a plurality of joints comprising a first joint and a second joint, wherein each of the plurality of joints comprises a plurality of slots having a closed internal interface therebetween such that the plurality of slots are volumetrically isolated internally; and
a tube with a hollow center connecting the first joint and the second joint to form a continuous internal volume within the airship structure, wherein one end of the tube is inserted into one of the plurality of slots of the first joint, and another end of the tube is inserted into one of the plurality of slots of the second joint;
wherein at least one slot connected to the tube has a hole configured to receive air injected into the continuous internal volume to inspect the airship structure.

12. The airship structure of claim 11, wherein the hole or another hole in at least one slot connected to the tube is configured to receive a pressure monitor that monitors air pressure within the continuous internal volume during an inspection of the airship structure;
optionally, wherein the pressure monitor is configured to monitor the air pressure within the continuous internal volume to detect defects in the plurality of joints and the tube.

13. The airship structure of claim 11 or 12, wherein the continuous internal volume is a single airtight volume when all holes in the slots connected to the tube are sealed to prevent air from escaping through the holes.

14. The airship structure of any of claims 11 to 13, further comprising:
a second continuous internal volume formed by one or more second tubes and a second plurality of joints; and
a bridge connection assembly having an air bridge tube, wherein a first end of the air bridge tube is coupled to the continuous internal volume via a first hole, and a second end of the air bridge tube is coupled to the second continuous internal volume via a second hole;
optionally, wherein the bridge connection assembly comprises a valve disposed along the air bridge tube, wherein the valve is configured to selectively connect and disconnect the continuous internal volume and the second continuous internal volume.

15. The airship structure of any of claims 11 to 14, wherein the plurality of joints and the tube form at least a section of a longeron of the airship structure; and/or wherein the plurality of joints and the tube form at least a section of a mainframe of the airship structure; and/or
wherein at least one of the plurality of joints has at least one additional slot different from the plurality of slots of that joint; and/or
wherein the plurality of joints have different numbers of slots or slot configurations.
